# FASCICULE DE BREVET EUROPEEN

(11) **EP 3 999 875 B1**
(45) Date de publication et mention de la délivrance du brevet: **14.02.2024**
(21) Numéro de dépôt: 20737029.7
(22) Date de dépôt: 10.07.2020
(51) Int. Cl.: G01S 13/56, E05B 81/78, E05F 15/73, G01S 13/87

(54) **PROCEDE D'OUVERTURE D'UN OUVRANT DE VEHICULE AUTOMOBILE PAR DETECTION DE MOUVEMENT, UTILISANT UN RADAR DOPPLER ET DISPOSITIF DE DETECTION ASSOCIE**
VERFAHREN ZUM ÖFFNEN EINER TÜR EINES KRAFTFAHRZEUGS DURCH BEWEGUNGSDETEKTION UNTER VERWENDUNG EINES DOPPLER-RADARS UND ZUGEHÖRIGE DETEKTIONSVORRICHTUNG
METHOD FOR OPENING A DOOR OF A MOTOR VEHICLE BY MOVEMENT DETECTION, USING A DOPPLER RADAR AND ASSOCIATED DETECTION DEVICE

(30) Priorité: 17.07.2019 US 201962875198 P; 26.09.2019 FR 1910646
(43) Date de publication de la demande: 25.05.2022
(73) Titulaire: Vitesco Technologies GmbH, 93055 Regensburg (DE)
(72) Inventeur: D'ARAUJO, Franck, 31100 Toulouse (FR); WASZAK, Wladia, 31100 Toulouse (FR); RICHARD, Hervé, 31100 Toulouse (FR)
(74) Mandataire: Vitesco Technologies
(86) Numéro de dépôt international: PCT/EP2020/069515
(87) Numéro de publication internationale: WO 2021/009028

(56) Documents cités:
- EP-A1- 2 159 362
- DE-A1-102012 014 482
- US-A1- 2018 170 309

## Description

### [Domaine technique]

L'invention se rapporte à un procédé d'ouverture/fermeture d'ouvrant par détection de mouvement de membre inférieur d'utilisateur, utilisant un radar doppler, et permettant un accès main libre sécurisé.

### [Etat de la technique antérieure]

L'application principale mais non exclusive de cette invention concerne l'ouverture de coffres de véhicule, pour permettre à l'utilisateur habilité d'ouvrir un coffre avec uniquement un mouvement de pied, l'utilisateur étant identifié par un badge ou une clé qu'il porte à l'aide d'un module de contrôle BCM (initiales de « body control module » en terminologie anglaise) situé dans le véhicule.

Jusqu'à présent, les demandes d'accès main libre comportent principalement le besoin de positionner une main pour confirmer une demande d'ouverture/fermeture d'ouvrant d'un véhicule, et ce processus comporte deux étapes principales : reconnaissance d'une clé ou d'un badge habilité à ouvrir ou fermer le véhicule à proximité de l'ouvrant par le BCM du système d'accès et, dans le cas d'une demande d'ouverture, détection de présence de la main sur une poignée.

La mise en oeuvre de ce procédé nécessite des antennes pour la détection de clés ou des badges habilités, des capteurs de présence dans les poignées, en général des capteurs capacitifs, pour la détection de main, ainsi qu'un système centralisé de gestion des demandes d'accès main libre, qui peut être par exemple un calculateur entièrement ou partiellement dédié à cette fonction.

Concernant l'utilisation du pied pour une ouverture sans contact, une application connue concerne l'ouverture de porte d'une salle d'opération pour le personnel hospitalier. Le modèle d'utilité CN 202 143 044 propose par exemple d'équiper la porte d'un capteur à induction de détection de pied. Les personnes qui souhaitent entrer ou sortir de la salle étendent leur pied près du capteur et le signal détecté par le capteur est transmis à un dispositif de commande d'un mécanisme d'ouverture / fermeture de la porte.

Une utilisation du pied pour un accès main libre au coffre d'une voiture est présentée dans la demande internationale WO 2012/052210. Ce document propose une détection de mouvement d'une partie du corps de l'utilisateur, par exemple le pied, par un ensemble de détection capacitive à deux électrodes allongées. Ces électrodes s'étendent horizontalement sous le coffre, la plus longue sous la plus courte, et sont couplés à un dispositif de commande et d'évaluation. Les variations de capacité sont suivies par rapport à un potentiel de référence, et lorsque le mouvement est dans l'intervalle de détection, une activation est déclenchée, par exemple l'ouverture du coffre.

Cependant l'utilisation de capteurs capacitifs présente certains inconvénients majeurs. En l'occurrence, les capteurs capacitifs sont sensibles aux perturbations extérieures (pluie, neige, etc..). La gestion des ouvrants d'un véhicule dans le cadre des demandes d'accès main libre à détection de main a été améliorée pour lutter contre différentes perturbations. Par exemple, le document de brevet FR 2 827 064 vise à identifier les perturbations générées par les peintures métalliques des voitures par un module d'interprétation logique des durées des signaux reçus.

Une solution apportée au problème des perturbations électromagnétiques est décrite dans le document de brevet FR 2 915 331. Il est proposé un filtrage temporel des signaux émanant des capteurs des poignées des ouvrants, afin de valider ou non la présence d'une main sur une poignée avant de valider une demande d'ouverture.

Le système d'ouverture/fermeture main libre dans l'état actuel de la technique offre donc un confort appréciable pour leurs utilisateurs, avec une confirmation d'ouverture/fermeture d'un ouvrant donné par la présence d'une main ou par un mouvement de pied. Cependant, des fausses détections comme celles résultant de perturbations provoquées par les phénomènes atmosphériques, en particulier la pluie, ou d'autres types (perturbations électromagnétiques, objets roulant sous le pare-choc, etc.) ne sont pas identifiées et déclenchent inopinément une fausse demande d'ouverture. Des solutions existent pour pallier certaines perturbations pour les ouvertures/fermetures par la main, mais aucune solution fiable n'existe pour des systèmes de détection de mouvements de pied. Même si, dans ce dernier cas, le système de détection est basé sur deux capteurs par ouvrant, le système n'est pas suffisamment fiabilisé dans un environnement bruité.

Il est donc connu d'utiliser à la place de capteurs capacitifs, un radar doppler. La détection d'un mouvement prédéterminé d'un membre inférieur du corps d'un utilisateur est réalisée par l'émission des ondes radar dirigées vers l'arrière du véhicule (le radar peut, par exemple être situé dans le parechoc arrière du véhicule) et par une analyse des ondes réfléchies par la présence de l'utilisateur. L'analyse des ondes réfléchies permet une détermination dynamique du mouvement : distance de l'utilisateur par rapport au radar, vitesse et forme du mouvement. La détection du mouvement prédéterminé déclenche l'ouverture du coffre. Un tel système de détection est par exemple divulgué dans la demande de brevet DE102012014482 A1.

Cependant, un inconvénient majeur du radar doppler selon l'art antérieur, est la précision, la fiabilité et robustesse de la détection du mouvement prédéterminé. En l'occurrence, la détection par un radar doppler n'est pas fiable, lorsque l'utilisateur réalise un mouvement d'aller-retour avec sa jambe en direction du pare choc, et que son pied glisse pendant le mouvement sur le sol. La détection par le radar doppler ne permet pas non plus de distinguer de manière robuste un mouvement prédéterminé, d'un mouvement provenant du bas d'une jambe d'un utilisateur passant près du véhicule, ou réalisant des allers retours en étant proche du véhicule mais ne souhaitant pas ouvrir son coffre.

La présente invention propose donc un procédé d'ouverture d'ouvrant, utilisant de manière optimisée deux radars doppler permettant de pallier les inconvénients de l'art antérieur. En l'occurrence le procédé d'ouverture d'ouvrant selon l'invention permet la détection du mouvement prédéterminé, de manière fiable et robuste.

### [Exposé de l'invention]

L'invention propose un procédé d'ouverture d'un ouvrant de véhicule automobile, le véhicule étant équipé d'un dispositif de détection d'un mouvement prédéterminé d'une partie du corps d'un utilisateur, le procédé étant remarquable en ce qu'il comprend les étapes suivantes :
- on équipe préalablement, le dispositif de deux radars doppler, un premier radar étant adapté pour émettre des ondes orientées vers l'arrière du véhicule, un deuxième radar étant adapté pour émettre des ondes orientées vers le sol, comprenant chacun une antenne des moyens d'émission et de réception d'ondes radar, et des moyens de traitement des ondes radar réfléchies adaptés pour détecter le mouvement prédéterminé,
- on mesure à fréquence fixe, pour chaque radar une composante en phase et une composante en décalage de phase des ondes réfléchies,
- on détermine un paramètre caractéristique d'au moins une des deux composantes pour chaque radar;
- on compare pour chaque radar, le paramètre caractéristique à une forme prédéterminée, comprenant un nombre prédéterminé de pics dont une valeur caractéristique est supérieure à un seuil de persistance prédéterminé,
- si le paramètre caractéristique présente pour le premier et deuxième radar la forme prédéterminée dans un même intervalle d'intérêt,
- et, si dans ledit intervalle d'intérêt, le premier radar présente également un nombre prédéterminé de changement de phase entre la composante en phase et la composante en décalage en phase,
- alors, il y a détection du mouvement prédéterminé et ouverture de l'ouvrant,
- sinon, il n'y a pas ouverture de l'ouvrant.

Dans un deuxième mode de réalisation, si le premier radar présente un nombre prédéterminé de changement de phase entre la composante en phase et la composante en décalage en phase, le procédé comprend une étape additionnelle suivante :
- comparaison dans ledit intervalle d'intérêt, d'une amplitude d'une des deux composantes du deuxième radar avec une amplitude minimum , si ladite amplitude est supérieure à l'amplitude minimum , alors
- il y a détection du mouvement prédéterminé et ouverture de l'ouvrant, sinon
- si dans ledit intervalle d'intérêt, le deuxième radar présente également le nombre prédéterminé de changement de phase entre la composante en phase et la composante en décalage en phase ,
- alors, il y a détection du mouvement prédéterminé et ouverture de l'ouvrant.
Sinon, il n'y a pas ouverture de l'ouvrant.

Avantageusement, le paramètre caractéristique des composantes en phase ou en décalage de phase est une amplitude ou une fréquence .

Préférentiellement, la composante en décalage de phase est une composante en quadrature de phase, décalée d'un angle de 90° par rapport à la composante en phase .

Judicieusement, la valeur caractéristique d'un pic est une persistance du pic.

Cependant, la valeur caractéristique d'un pic peut être également une amplitude du pic, ou une intégrale des valeurs du pic selon le temps entre une valeur minimum du pic et une valeur maximum du pic.

Lorsque le mouvement prédéterminé est celui d'un aller-retour d'une partie du corps de l'utilisateur vers le dispositif de détection, alors le nombre prédéterminé de changement de phase est égal à un et le nombre prédéterminé de pic est égale à deux.

L'invention concerne également un dispositif de détection d'un mouvement prédéterminé d'une partie du corps d'un utilisateur, adapté pour être embarqué dans un véhicule automobile, le dit dispositif étant remarquable en ce qu'il comprend deux radars doppler, un premier radar étant adapté pour émettre des ondes orientées vers l'arrière du véhicule, un deuxième radar étant adapté pour émettre des ondes orientées vers le sol, comprenant chacun une antenne des moyens d'émission et de réception d'ondes radar, et des moyens de traitement des ondes radar réfléchies adaptés pour détecter le mouvement prédéterminé, les moyens de traitement comprenant :
- des moyens d'extraction d'au moins un paramètre physique de la composante en phase ou de la composante en décalage de phase,
- des premiers moyens de comparaison, dans un intervalle d'intérêt, du paramètre physique avec une forme prédéterminé comprenant un nombre prédéterminé de pics dont une valeur caractéristique est supérieure à un seuil,
- des premiers moyens de vérification d'une synchronisation des formes prédéterminées entre les deux radars,
- et pour le premier radar uniquement :
- des deuxièmes moyens de vérification dans ledit intervalle d'intérêt de la présence d'un nombre prédéterminé de changement de phase entre la composante en phase et la composante en décalage de phase,
- des moyens de déverrouillage des ouvrants en fonction des résultats de la vérification et des comparaison ci-dessus.

Dans le deuxième mode de réalisation, le dispositif de détection comprend en outre :
- pour le deuxième radar, des deuxièmes moyens de comparaison entre une amplitude de la composante en phase ou en décalage de phase avec une amplitude minimum,
- pour le deuxième radar, des troisièmes moyens de vérification dans le dite intervalle d'intérêt de la présence d'un nombre prédéterminé de changement de phase entre la composante en phase et la composante en décalage de phase,
- des moyens de déverrouillage des ouvrants en fonction des résultats de la vérification et de la comparaison ci-dessus.

Avantageusement le paramètre caractéristique des composantes en phase ou en décalage de phase est une amplitude ou une fréquence.

Judicieusement, la composante en décalage de phase est une composante en quadrature de phase, décalée d'un angle de 90° par rapport à la composante en phase.

Préférentiellement, la valeur caractéristique d'un pic est une persistance du pic.

Cependant, la valeur caractéristique d'un pic est une amplitude du pic, ou une intégrale des valeurs du pic selon le temps entre une valeur minimum du pic et une valeur maximum du pic.

Lorsque le mouvement prédéterminé est celui d'un aller-retour d'une partie du corps de l'utilisateur vers le dispositif de détection, le nombre prédéterminé de changement de phase est égal à un et le nombre prédéterminé de pic est égale à deux

L'invention s'applique également à tout véhicule automobile, comprenant un dispositif de détection selon l'une quelconque des caractéristiques énumérées ci-dessus.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] : la **figure 1** représente schématiquement un véhicule équipé d'un dispositif de détection d'un mouvement prédéterminé d'une partie du corps d'un utilisateur comprenant deux radars doppler, selon l'invention,
[Fig. 2] : la **figure 2** représente schématiquement un premier radar du dispositif de détection, et ses composants électroniques, selon l'invention,
[Fig. 3] : la **figure 3** représente schématiquement les moyens d'émission et de réception des ondes radar reliés à une première antenne A1, comprenant en outre des moyens de démodulation en phase et en décalage de phase, selon l'invention,
[Fig. 4] : la **figure 4** représente la composante en phase I représentant une variation de phase des ondes réfléchies, et la composante en quadrature de phase Q représentant une variation de phase décalée des ondes réfléchies selon le temps t,
[Fig. 5] : la **figure 5** est un logigramme représentant les différentes étapes du procédé d'ouverture des ouvrants selon l'invention,

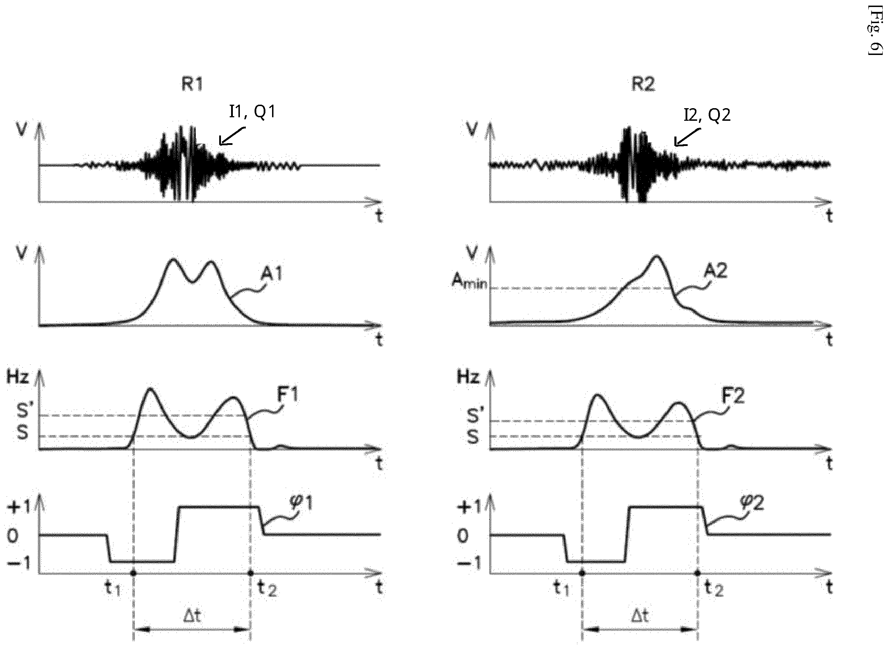

[Fig.6] : la **figure 6** comprend huit graphes, à gauche quatre graphes concernant les signaux reçus par le premier radar R1 :un premier graphe illustrant les signaux bruts du radar doppler des composantes en phase I1 et en décalage de phase Q1, un deuxième graphe représentant l'amplitude de la composante en phase 11, un troisième graphe représentant la fréquence F1 de la composante en phase, et un quatrième graphe représentant un changement de phase ϕ1 entre la composante en phase I1 et la composante en décalage de phase Q1, à droite se trouvent quatre graphes concernant les signaux reçus par le deuxième radar R2 : un premier graphe illustrant les signaux bruts du radar doppler des composantes en phase I2 et en décalage de phase Q2, un deuxième graphe représentant l'amplitude de la composante en phase I2, un troisième graphe représentant la fréquence F2 de la composante en phase, et un quatrième graphe représentant un changement de phase ϕ2 entre la composante en phase I2 et la composante en décalage de phase Q2,lors de la réalisation d'un mouvement prédéterminé par l'utilisateur afin de déverrouiller le coffre de son véhicule,

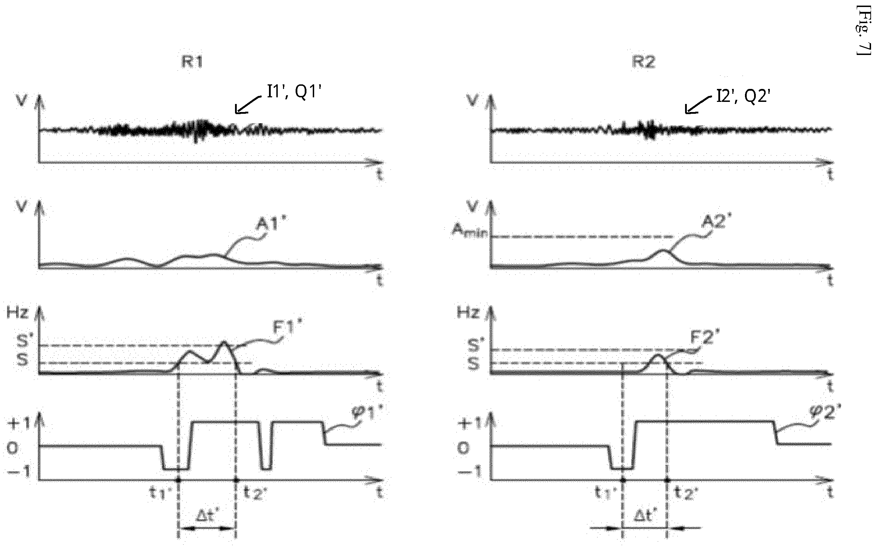

[Fig.7] : la **figure 7** comprend huit graphes, à gauche quatre graphes concernant les signaux reçus par le premier radar R1 :un premier graphe illustrant les signaux bruts du radar doppler des composantes en phase I1' et en décalage de phase Q1', un deuxième graphe représentant l'amplitude de la composante en phase I1', un troisième graphe représentant la fréquence F1' de la composante en phase, et un quatrième graphe représentant un changement de phase ϕ1' entre la composante en phase I1' et la composante en décalage de phase Q1', à droite se trouvent quatre graphes concernant les signaux reçus par le deuxième radar R2 : un premier graphe illustrant les signaux bruts du radar doppler des composantes en phase I2' et en décalage de phase Q2', un deuxième graphe représentant l'amplitude de la composante en phase I2, un troisième graphe représentant la fréquence F2' de la composante en phase, et un quatrième graphe représentant un changement de phase ϕ2' entre la composante en phase I2' et la composante en décalage de phase Q2', lors de la réalisation d'un mouvement parasite par l'utilisateur non adapté à déverrouiller le coffre de son véhicule,
[Fig.8] : la **figure 8** représente schématiquement la valeur de la persistance calculée pour cinq pics de fréquence du signal de fréquence du premier radar.

### [Description des modes de réalisation

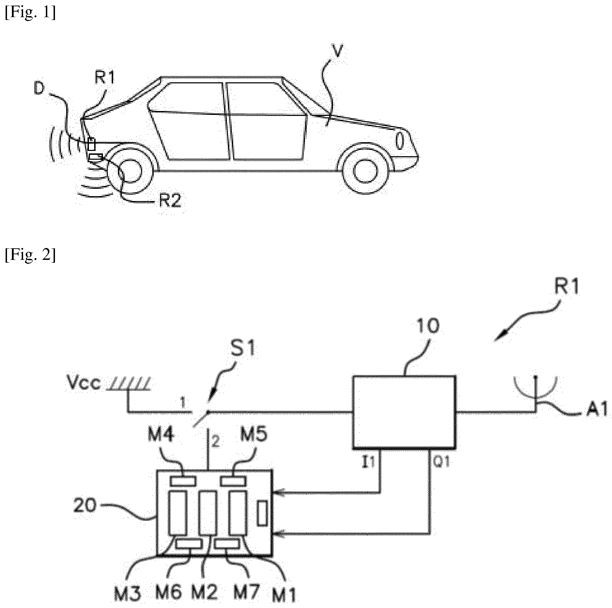

A la figure 1, est représenté un véhicule automobile V, équipé d'un dispositif de détection D d'un mouvement prédéterminé d'une partie du corps d'un utilisateur, selon l'invention et destiné à déclencher l'ouverture d'un ouvrant, en l'occurrence dans cet exemple du coffre du véhicule V. Ledit dispositif de détection D est adapté pour être embarqué dans un véhicule automobile, et est compris, de manière préférentielle, mais nullement limitative dans le pare choc arrière du véhicule V. Plus particulièrement ledit dispositif comprend deux radars doppler R1, R2, chacun comprenant une antenne A1, des moyens d'émission et de réception des ondes radar par ladite antenne A1 et des moyens de traitement des ondes radar réfléchies afin de détecter le mouvement prédéterminé. Un premier radar R1 est adapté pour émettre des ondes radar orientées vers l'arrière du véhicule. Un deuxième radar R2 et adapté pour émettre des ondes radar orientées vers le bas du véhicule, plus précisément vers le sol. Les deux radars R1, R2 sont intégrés par exemple dans le pare choc du véhicule V.

Le mouvement prédéterminé peut consister en un « kick » ou mouvement d'aller/retour du bas de la jambe d'un utilisateur dirigés vers les deux radars, en l'occurrence dans cet exemple, vers le pare choc du véhicule V. Cependant, la présente invention s'applique à tout mouvement prédéterminé.

Le traitement des ondes radar émises par un radar unique et réfléchies par la présence du corps de l'utilisateur permettant de déterminer si le dit utilisateur a effectué le mouvement prédéterminé et donc s'il souhaite ouvrir le coffre de son véhicule est connu de l'art antérieur. Si le mouvement prédéterminé est détecté, alors l'ouverture du coffre est déclenchée, cela est connu de l'homme du métier et ne sera pas plus détaillé ici. L'inconvénient d'un radar doppler, comme expliqué précédemment, est le manque de fiabilité et de robustesse de la détection.

A la figure 2 est représenté le premier radar R1, qui comprend une première antenne A1 reliée à des moyens d'émission et de réception 10, eux-mêmes reliés à une unité de contrôle 20. Les moyens d'émission/réception 10 sont alimentés en tension Vcc, par directement ou indirectement la tension de la batterie du véhicule V. Des moyens de commutation S1, permet d'alimenter les moyens d'émission/réception 10. Le deuxième radar R2, non illustré, comprend les mêmes composants que le premier radar R1.

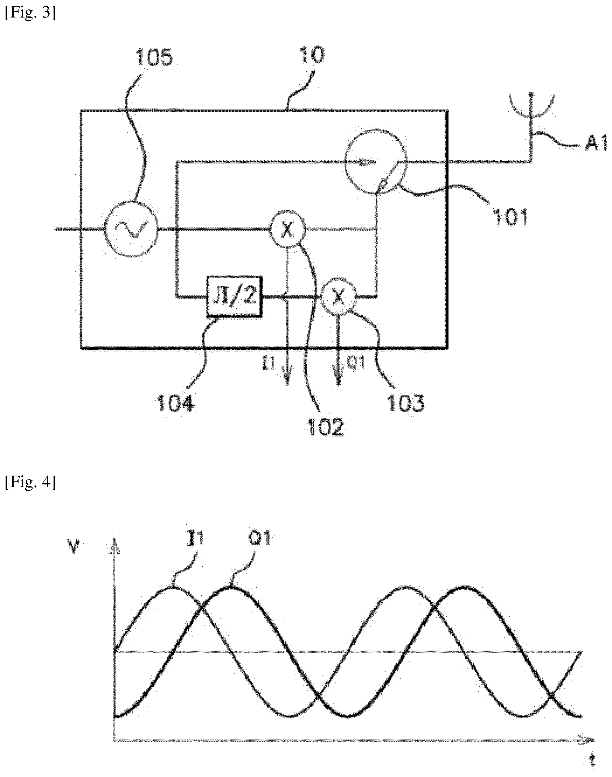

Selon l'invention, comme illustré à la figure 3, les moyens d'émission et de réception 10 comprennent en outre un coupleur directionnel 101 connecté à la première antenne A1 ; deux démodulateurs reliés à une sortie du coupleur directionnel, un premier démodulateur 102 adapté pour fournir en sortie un composante en phase I1 représentant les variations de phase des ondes réfléchies et reçues par la première antenne A1, et un deuxième démodulateur 103 adapté pour fournir en sortie un composante en décalage de phase Q1 représentant les variations de phase décalée des ondes réfléchies et reçues par la première antenne A1. Pour cela un déphaseur 104 est connecté au deuxième démodulateur 103. Le coupleur directionnel 101 permet aux moyens d'émission/réception 10 de fonctionner en émission et en réception de manière simultanée et permet de séparer le signal d'émission, du signal de réception, c'est-à-dire l'onde radar émise de l'onde radar reçue. Une sortie du premier démodulateur 102 et une sortie du déphaseur 104 sont reliées à une entrée du coupleur directionnelle 101, ainsi qu'à un oscillateur 105, générant le signal d'émission à destination de la première antenne A1. Le deuxième radar R2, non représenté comprend de manière similaire, un coupleur directionnel, un premier démodulateur, un deuxième démodulateur, un déphaseur, et un oscillateur.

Lorsque des ondes radar sont réfléchies par la présence du corps de l'utilisateur et reçues par la première antenne A1, par l'intermédiaire du coupleur directionnel, le signal des ondes réfléchies est transmis au premier démodulateur 102 qui génère une composante en phase I1 représentative de la phase des ondes. La composante en phase I1 est représentée selon le temps sur le graphe illustré à la figure 4. La composante en phase I1 est un signal de forme sinusoïdale.

Le signal des ondes réfléchies est également transmis au deuxième démodulateur 103 qui génère quant à lui une composante en décalage de phase Q1 représentative d'une phase décalée des ondes, plus précisément la composante en décalage de phase Q1 est une image de la composante en phase I1 décalée dans le temps t. Préférentiellement, mais de manière nullement limitative, le décalage de phase est un décalage d'angle de valeur 90°. La composante en décalage de phase est alors appelée composante en quadrature de phase Q1 et est représentée selon le temps t sur le graphe illustré à la figure 4, la composante en quadrature de phase Q1 est donc également un signal de forme sinusoïdale.

Les signaux représentatifs des composantes en phase I1 et de la composante en quadrature de phase Q1 sont alors fournies à l'unité de contrôle 20 qui analyse les dits signaux. L'unité de contrôle 20 comprend également pour chaque radar, c'est-à-dire pour le premier et respectivement pour le deuxième radar R1, R2 :
- Des moyens d'extraction M1 d'au moins un paramètre physique, par exemple soit l'amplitude A1 (respectivement A2), soit la fréquence F1 (respectivement F2) de la composante en phase I1 (I2) ou de la composante en décalage de phase Q1 (Q2),
- Des premiers moyens de comparaison M2, dans un intervalle d'intérêt Δt, du paramètre physique A1 (A2), F1 (F2) avec une forme prédéterminé comprenant un nombre prédéterminé de pics dont une valeur caractéristique, par exemple la persistance Per est supérieure à un seuil,
- Des premiers moyens de vérification M3 d'une synchronisation des formes prédéterminées entre les deux radars R1, R2,
Et pour le premier radar R1 uniquement :
- Des deuxièmes moyens de vérification M4 dans ledit intervalle d'intérêt Δt, de la présence d'un nombre prédéterminé de changements de phase entre la composante en phase I1 et la composante en décalage de phase Q1,
- Des moyens de déverrouillage des ouvrants M5 en fonction des résultats des vérification(s) et comparaison(s) ci-dessus.

Les moyens d'extraction M1, les premiers moyens de comparaison M2, les premiers et deuxièmes moyens de vérification M3, M4 et les moyens de déverrouillage M5 sont partiellement ou totalement des moyens logiciels pouvant être compris dans un microcontrôleur.

Dans un deuxième mode de réalisation de l'invention, l'unité de contrôle 20 comprend en outre, pour les ondes réfléchies et reçues pour le deuxième radar R2 uniquement :
- Des deuxièmes moyens de comparaison M6 entre une amplitude A2 de la composante en phase I2 ou en décalage de phase Q2 avec une amplitude prédéterminée,
- Des troisièmes moyens de vérification M7 dans le dite intervalle d'intérêt Δt de la présence d'un nombre prédéterminé de changements de phase entre la composante en phase I2 et la composante en décalage de phase Q2 pour le deuxième radar R2,
- Des moyens de déverrouillage des ouvrants M8 en fonction des résultats de la vérification et de la comparaison ci-dessus.

Le décalage de phase est de manière préférentiellement mais nullement limitative un décalage d'angle de valeur 90° (ou π/2) entre la composante en phase I1 (I2) et la composante en quadrature de phase Q1 (Q2). Mais il peut être envisagé toute autre valeur de décalage d'angle entre 0° et 180°.

Préférentiellement, et comme décrit ci-dessous, le nombre prédéterminé de changements de phase est égal à un.

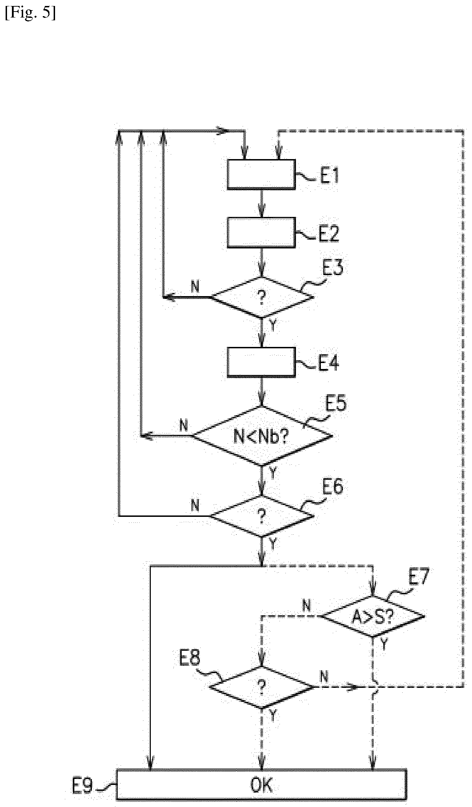

Le procédé d'ouverture des ouvrants du véhicule, selon l'invention est illustré à la figure 5 et va maintenant être décrit.

Dans un premier mode de réalisation du procédé selon l'invention, la première étape E1 consiste à mesurer, pour chaque radar R1, R2, la composante en phase 11, I2 et la composante en quadrature de phase Q1, Q2 des ondes radar réfléchies, en continu à fréquence fixe et à en extraire au moins pour l'une des deux composantes un paramètre caractéristique tel que :
- une amplitude A1, A2, ou
- une fréquence F1, F2,
ainsi que l'écart de phase entre les deux composantes, c'est à dire une différence de phase ϕ1, ϕ2 entre le composante en phase I1,(respectivement I2) et la composante en quadrature de phase Q1 (respectivement Q2). On considérera par soucis de clarté dans la suite du texte, que le paramètre caractéristique utilisé dans le procédé d'ouverture selon l'invention est la fréquence F1 (respectivement F2) de la composante en phase I1 (respectivement I2), il pourrait également s'agir de l'amplitude A1 (respectivement A2), et/ou de la composante en décalage de phase Q1 (respectivement Q2).

Puis, lors d'une deuxième étape E2, pour chaque radar R1, R2 on compare le paramètre caractéristique, c'est-à-dire la fréquence F1 (F2) de la composante en phase I1 (I2), à des seuils prédéterminés, au moins un seuil, préférablement deux, un seuil haut et un seuil bas. Le but de cette étape, est de vérifier pour chacun des deux radars R1, R2 que le paramètre caractéristique F1 (F2) de la composante en phase I1 (I2), suit une forme prédéterminée. Cette forme prédéterminée ressemble préférentiellement à une succession de deux pics, ou double « cloche ». Ceci est illustré à la figure 6. A la figure 6, est illustré au troisième graphe en partant du haut, et à gauche le paramètre caractéristique, en l'occurrence la fréquence F1 de la composante en phase I1 du premier radar R1, et à droite le paramètre caractéristique, en l'occurrence la fréquence F2 de la composante en phase I2 du deuxième radar R2 dans le cas d'un mouvement prédéterminé. Ces fréquences F1, F2 comportent chacune deux pics successifs. A la figure 6, il est illustré deux seuils S et S', les seuils peuvent être différents entre les paramètres caractéristiques des deux radars R1, R2.

Pour chaque radar, R1 R2, si le paramètre représentatif, ici la fréquence F1, F2 de la composante en phase 11, I2 suit la forme prédéterminée, en l'occurrence par le passage des premier et deuxième seuils S, S' -(supérieur aux premier seuil S et deuxième seuil S' puis consécutivement inférieur au deuxième seuil S' puis supérieur au 2^{ème} seuil et enfin inférieur au premier et deuxième seuil S, S' prédéterminés), alors il est vérifié à l'étape suivante E3, que les instants de dépassements desdits seuils supérieur et inférieur pour les deux radars R1, R2 sont compris dans une même fenêtre de temps prédéterminée ou dans un même intervalle de temps Δt. Le but étant dans cette étape E3, de vérifier que les instants de dépassement des seuils supérieur et inférieur sont sensiblement synchronisés entre les deux radars R1, R2. Sur le troisième graphe à gauche de la figure 6, t1 correspond au premier instant de dépassement du premier seuil S par la fréquence F1, ce qui correspond au début de la forme prédéterminée, et t2 correspond au dernier instant où la fréquence F1 passe en dessous du premier seuil S, ce qui correspond à la fin de la forme prédéterminée. On appellera l'intervalle Δt entre le premier instant t1 et le dernier instant t2, l'intervalle d'intérêt. On entend par « synchronisés », le fait que les formes prédéterminées pour les deux radars R1, R2 se situent dans ledit intervalle d'intérêt Δt auquel on peut ajouter bien sûr une marge d'erreur. Ceci est illustré à la figure 6, sur le troisième graphe à droite de la figure 6, les instants de dépassements des seuils supérieur et inférieur sont situés dans le même intervalle d'intérêt Δt.

Sinon, si les instants de dépassements des seuils du paramètre représentatif de chaque radar R1, R2 ne sont pas compris dans le même intervalle d'intérêt Δt, en d'autres termes si les fréquences F1, F2 des composantes en phase des deux radars R1, R2 ne présentent pas des formes prédéterminées synchronisées, alors le procédé revient à la première étape E1.

Si les formes prédéterminées du paramètre représentatif F1, F2 sont synchronisées entre les deux radars R1, R2, alors on dénombre à l'étape suivante (étape E4) dans ledit intervalle d'intérêt Δt, un nombre de pics présents et on calcule également pour chaque pic une valeur caractéristique.

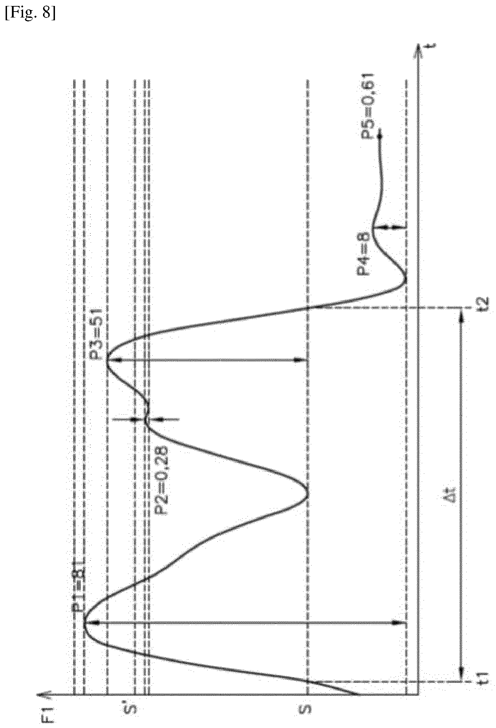

Une valeur caractéristique est préférentiellement, mais de manière nullement limitative, une persistance du pic Per. Le calcul de la persistance d'un pic Per est connu de l'homme du métier et peut être trouvée dans la littérature scientifique (http://www2.iap.fr/users/sousbie/web/html/indexd3dd.html?post/Persistence-and-simplification, http://www.astro.rug.nl/~weygaert/tim1publication/jigsaw/cohensteiner_jigsa w.pdf,https://geometrica.saclay.inria.fr/team/Steve.Oudot/courses/EMA/Slides_intro.pdf,htt ps://www.sthu.org/blog/13-perstopology-peakdetection/index.htm). La persistance du pic est illustrée à la figure 8. La figure 8 représente une forme prédéterminée de la fréquence F1 de la composante en phase I1 du premier radar R1 dans l'intervalle d'intérêt Δt. Sont illustrés également cinq calculs de persistance Per pour cinq pics, P1, P2, P3, P4 et P5. La persistance du premier pic P1 vaut 81, la persistance du deuxième pic P2 vaut 0.28, celle du troisième pic P3 vaut 51, celle du quatrième pic P4 vaut 8, et enfin celle du cinquième pic P5 vaut 0.61. Les deux pics ayant la persistance Per la plus élevée sont le premier pic P1 et le troisième pic P3.

La valeur caractéristique peut être également une amplitude du pic, ou une intégrale selon le temps des valeurs comprises entre une valeur minimum du pic et une valeur maximum du pic ou tout autre calcul permettant d'évaluer l'importance relative d'un pic du paramètre représentatif par rapport à aux autre pics présents dans l'intervalle d'intérêt Δt.

Une fois, le nombre de pics présents dans l'intervalle de temps déterminés, et caractérisés par, par exemple, leur persistance Per, on vérifie à l'étape E5 pour chaque radar R1, R2 que le nombre de pics du paramètre représentatif F1, F2, ayant une persistance au-dessus d'un seuil de persistance prédéterminé est strictement inférieur à un nombre prédéterminé Nb, par exemple 3. Le but de cette étape E5 est de filtrer tout événement pouvant créer des ondes réfléchies multiples, engendrant de nombreux pics de forte persistance Per, tel que par exemple un individu passant près du véhicule ou l'utilisateur opérant sur sa voiture mais ne souhaitant pas déverrouiller le coffre de son véhicule V.

Si dans l'intervalle d'intérêt Δt, le nombre de pics ayant une persistance Per au-dessus d'un seuil de persistance prédéterminé est strictement inférieur à 3 (étape E5), alors à l'étape suivante, (étape E6) on vérifie la présence dans les ondes réfléchies et reçues par le premier radar R1 uniquement, en l'occurrence celui émettant des ondes orientées vers l'arrière du véhicule, d'un nombre prédéterminé de changements de phase ϕ1 entre la composante en phase I1 et la composante en quadrature de phase Q1. Préférentiellement, le nombre prédéterminée est égal à un. Ceci est illustré à la figure 6, qui illustre au quatrième graphe situé en bas à gauche de la figure 6, un seul et unique changement de phase entre la composante en phase I et la composante en quadrature de phase Q, représenté par un front ascendant allant de la valeur +1 à la valeur -1, lors de la réalisation du mouvement prédéterminé. Dans le cas, ou la composante Q1 est une composante en quadrature de phase , le changement de phase ϕ1 peut prendre la valeur -90° ou +90°. Au quatrième graphe à gauche de la figure 6, le changement de phase a été normalisé à -1 ou +1. Le changement de phase peut être donc être soit un front ascendant de -1 à +1, soit un front descendant de +1 à -1 selon le sens du calcul du décalage de phase et la normalisation choisie.

Si les ondes reçues par premier radar R1 présentent le nombre prédéterminé de changements de phaseϕ1 (étape E6) en l'occurrence dans notre exemple un seul et unique changement de phase, pendant l'intervalle d'intérêt Δt, alors le mouvement prédéterminé est détecté et le déverrouillage du coffre est actionné, sinon le mouvement prédéterminé n'est pas détecté et le coffre reste verrouillé.

Dans un mode de réalisation préférentielle, il est proposé, après l'étape E6, de vérifier la présence des mouvements prédéterminés atypiques, mais valides en l'occurrence celui du pied glissé, et de le distinguer d'un mouvement de type « marcheur » c'est-à-dire d'un individu marchant près du parechoc mais ne réalisant pas le mouvement prédéterminé et non apte à déverrouiller le coffre du véhicule V.

Pour cela, à la suite de la détection du nombre prédéterminé de changements de phase ϕ1 sur les ondes réfléchies et reçues par le premier radar R1, il est proposé des étapes supplémentaires représentés en pointillés sur le logigramme de la figure 5.

Il est alors vérifié à l'étape E7 que, pendant ledit intervalle d'intérêt Δt, l'amplitude A2 d'au moins une des deux composantes, par exemple de la composante en phase I2 (ou en décalage de phase Q2) des ondes reçues par le deuxième radar R2 est supérieure à une amplitude minimum Amin (cf ; deuxième graphe à droite de la figure 6).

Si l'amplitude A2 d'une des composantes des ondes reçues par le deuxième radar R2 est au-dessus d'une amplitude prédéterminée Amin, alors un mouvement prédéterminé mais atypique a été détecté, et le déverrouillage a été actionné.

Si l'amplitude A2 par exemple de la composante en phase I2 du deuxième radar R2 est inférieure à une amplitude prédéterminée pendant ledit intervalle d'intérêt Δt, alors il est vérifié à l'étape E8, que les ondes reçues par le deuxième radar R2 présentent le nombre prédéterminé de changements de phase ϕ2 pendant le dit intervalle d'intérêt Δt, en l'occurrence dans cet exemple un seul et unique changement de phase..

Si les ondes reçues par le deuxième radar R2 présentent un seul changement de phase ϕ2, pendant le dit intervalle d'intérêt Δt alors un mouvement prédéterminé atypique mais valide a été détecté et le déverrouillage est actionné, sinon aucun mouvement prédéterminé atypique a été détecté et le coffre reste verrouillé.

Ce mode de réalisation préférentiel, permet la reconnaissance d'un mouvement de type glissement de pied sur le sol et surtout permet de ne pas considérer le mouvement issu par exemple du marcheur comme un mouvement prédéterminé, c'est-à-dire d'un individu marchant à coté du dispositif de détection, mais ne réalisant pas le mouvement prédéterminé.

Ainsi ingénieusement, dans le premier mode de réalisation, le déverrouillage n'est réalisé que sur la détection d'un événement détecté par les deux radars de façon synchronisé puis sur l'analyse des signaux issu du premier radar R1.

Le deuxième mode de réalisation, qui est un perfectionnement quant à lui se base sur l'analyse des signaux provenant des deux radars R1, R2 afin de rejeter des mouvements de type marcheur, qui seraient détectés comme valides par le premier mode de réalisation.

La figure 7 illustre pour les ondes reçues par le premier et deuxième radars R1 (graphes se situant à gauche de la figure 6), R2 (graphes se situant à droite de la figure 6) et selon le temps, des signaux des composantes en phase I1', I2' et en décalage de phase Q1', Q2', de l'amplitude A1', A2', et de la fréquence F1', F2' de la composante en phase I1', I2' et du changement de phase ϕ1', ϕ2' lors d'un événement parasite de la part de l'utilisateur qui n'est pas un mouvement prédéterminé. La fréquence F1' présente une forme prédéterminée pendant l'intervalle d'intérêt Δt', sous la forme de deux pics principaux, mais la fréquence F2' ne présente pas la forme prédéterminée pendant le même intervalle d'intérêt Δt'. Par conséquent le mouvement n'est pas un mouvement prédéterminé, selon l'exemple décrit et expliqué ci-dessus.

L'invention est donc ingénieuse dans la mesure où elle pallie les inconvénients de l'art antérieur, le procédé d'ouverture des ouvrants selon l'invention permet une détection fiable et robuste en utilisant de manière judicieuse et non redondante les signaux issus de deux radars doppler et disposés de manière particulière sur le véhicule V afin d'éviter la redondance des mesures.

## Revendications

1. Procédé d'ouverture d'un ouvrant de véhicule automobile (V), le véhicule (V) étant équipé d'un dispositif de détection (D) d'un mouvement prédéterminé d'une partie du corps d'un utilisateur, le procédé étant **caractérisé en ce qu'**il comprend les étapes suivantes :
• on équipe préalablement, le dispositif de deux radars doppler, un premier radar (R1) étant adapté pour émettre des ondes orientées vers l'arrière du véhicule (V), un deuxième radar (R2) étant adapté pour émettre des ondes orientées vers le sol (V), comprenant chacun une antenne (A1) des moyens d'émission et de réception d'ondes radar (10), et des moyens de traitement (20) des ondes radar réfléchies adaptés pour détecter le mouvement prédéterminé,
• on mesure à fréquence fixe, pour chaque radar (R1, R2) une composante en phase (I1, I2) et une composante en décalage de phase (Q1, Q2) des ondes réfléchies,
• on détermine un paramètre caractéristique (A1, A2, F1, F2) d'au moins une des deux composantes pour chaque radar (R1, R2);
• on compare pour chaque radar (R1, R2), le paramètre caractéristique (A1, A2, F1, F2) à une forme prédéterminée, comprenant un nombre prédéterminé de pics dont une valeur caractéristique (Per) est supérieure à un seuil de persistance prédéterminé,
• si le paramètre caractéristique (A1, A2, F1, F2) présente pour le premier et deuxième radar (R1, R2) la forme prédéterminée dans un même intervalle d'intérêt (Δt),
• et, si dans ledit intervalle d'intérêt (Δt), le premier radar (R1) présente également un nombre prédéterminé de changement de phase entre la composante en phase (I1) et la composante en décalage en phase (Q1),
• alors, il y a détection du mouvement prédéterminé et ouverture de l'ouvrant,
• sinon, il n'y a pas ouverture de l'ouvrant.

2. Procédé d'ouverture d'un ouvrant de véhicule automobile (V), le véhicule (V) étant équipé d'un dispositif de détection (D) d'un mouvement prédéterminé d'une partie du corps d'un utilisateur, le procédé étant **caractérisé en ce qu'**il comprend les étapes suivantes :
• on équipe préalablement, le dispositif de deux radars doppler, un premier radar (R1) étant adapté pour émettre des ondes orientées vers l'arrière du véhicule (V), un deuxième radar (R2) étant adapté pour émettre des ondes orientées vers le sol (V), comprenant chacun une antenne (A1) des moyens d'émission et de réception d'ondes radar (10), et des moyens de traitement (20) des ondes radar réfléchies adaptés pour détecter le mouvement prédéterminé,
• on mesure à fréquence fixe, pour chaque radar (R1, R2) une composante en phase (I1, I2) et une composante en décalage de phase (Q1, Q2) des ondes réfléchies,
• on détermine un paramètre caractéristique (A1, A2, F1, F2) d'au moins une des deux composantes pour chaque radar (R1, R2);
• on compare pour chaque radar (R1, R2), le paramètre caractéristique (A1, A2, F1, F2) à une forme prédéterminée, comprenant un nombre prédéterminé de pics dont une valeur caractéristique (Per) est supérieure à un seuil de persistance prédéterminé,
• on vérifie que le paramètre caractéristique (A1, A2, F1, F2) présente pour le premier et deuxième radar (R1, R2) la forme prédéterminée dans un même intervalle d'intérêt (Δt),
• on vérifie que, dans ledit intervalle d'intérêt (Δt), le premier radar (R1) présente également un nombre prédéterminé de changement de phase entre la composante en phase (I1) et la composante en décalage en phase (Q1), et si c'est le cas, alors le procédé comprend une étape additionnelle suivante :
• comparaison dans ledit intervalle d'intérêt (Δt), d'une amplitude (A2) d'une des deux composantes du deuxième radar (R2) avec une amplitude minimum (Amin), si ladite amplitude (A2) est supérieure à l'amplitude minimum (Amin), alors
• il y a détection du mouvement prédéterminé et ouverture de l'ouvrant,
sinon
i) si dans ledit intervalle d'intérêt (Δt), le deuxième radar (R2) présente également le nombre prédéterminé de changement de phase entre la composante en phase (I2) et la composante en décalage en phase (Q2),
1) alors, il y a détection du mouvement prédéterminé et ouverture de l'ouvrant ;
2) sinon, il n'y a pas ouverture de l'ouvrant.

3. Procédé de d'ouverture d'un ouvrant, selon l'une quelconque des revendications précédentes, caractérisé ce en que le paramètre caractéristique des composantes en phase (I1, I2) ou en décalage de phase (Q1, Q2) est une amplitude (A1, A2) ou une fréquence (F1, F2).

4. Procédé d'ouverture d'un ouvrant, selon l'une quelconque des revendications précédentes, caractérisé en que la composante en décalage de phase (Q1, Q2) est une composante en quadrature de phase, décalée d'un angle de 90° par rapport à la composante en phase (I1, I2).

5. Procédé d'ouverture d'un ouvrant, selon l'une quelconque des revendications précédentes, **caractérisé en ce que** la valeur caractéristique d'un pic est une persistance du pic (Per).

6. Procédé d'ouverture d'un ouvrant, selon l'une quelconque des revendications 1 à 5, **caractérisé en ce que** la valeur caractéristique (Per) d'un pic est une amplitude du pic, ou une intégrale des valeurs du pic selon le temps entre une valeur minimum du pic et une valeur maximum du pic.

7. Procédure d'ouverture d'un ouvrant, selon l'une quelconque des revendications précédentes, **caractérisé en ce que** le mouvement prédéterminé étant celui d'un aller-retour d'une partie du corps de l'utilisateur vers le dispositif de détection, le nombre prédéterminé de changement de phase est égal à un et le nombre prédéterminé de pic est égale à deux.

8. Dispositif de détection (D) d'un mouvement prédéterminé d'une partie du corps d'un utilisateur, adapté pour être embarqué dans un véhicule automobile (V), le dit dispositif étant **caractérisé en ce qu'**il comprend deux radars doppler, un premier radar (R1) étant adapté pour émettre des ondes orientées vers l'arrière du véhicule (V), un deuxième radar (R2) étant adapté pour émettre des ondes orientées vers le sol (V), comprenant chacun une antenne (A) des moyens d'émission et de réception d'ondes radar (10), et des moyens de traitement (20) des ondes radar réfléchies adaptés pour détecter le mouvement prédéterminé, les moyens de traitement (20) comprenant :
• des moyens d'extraction (M1) d'au moins un paramètre physique (A1, A2, F1, F2) d'une composante en phase (I1, I2) ou d'une composante en décalage de phase (Q1, Q2),
• des premiers moyens de comparaison (M2), dans un intervalle d'intérêt (Δt), d'un paramètre physique (A1, A2, F1, F2) avec une forme prédéterminé comprenant un nombre prédéterminé de pics dont une valeur caractéristique (Per) est supérieure à un seuil,
• des premiers moyens de vérification (M3) d'une synchronisation des formes prédéterminées entre les deux radars (R1, R2),
Et pour le premier radar (R1) uniquement :
• des deuxièmes moyens de vérification (M4) dans ledit intervalle d'intérêt (Δt), de la présence d'un nombre prédéterminé de changement de phase entre la composante en phase (I1) et la composante en décalage de phase (Q1),
• des moyens de déverrouillage de l'ouvrant (M5) en fonction des résultats des vérification(s) et comparaison(s) ci-dessus.

9. Dispositif de détection (D) d'un mouvement prédéterminé d'une partie du corps d'un utilisateur, adapté pour être embarqué dans un véhicule automobile (V), le dit dispositif étant **caractérisé en ce qu'**il comprend deux radars doppler, un premier radar (R1) étant adapté pour émettre des ondes orientées vers l'arrière du véhicule (V), un deuxième radar (R2) étant adapté pour émettre des ondes orientées vers le sol (V), comprenant chacun une antenne (A) des moyens d'émission et de réception d'ondes radar (10), et des moyens de traitement (20) des ondes radar réfléchies adaptés pour détecter le mouvement prédéterminé, les moyens de traitement (20) comprenant :
• des moyens d'extraction (M1) d'au moins un paramètre physique (A1, A2, F1, F2) d'une composante en phase (I1, I2) ou d'une composante en décalage de phase (Q1, Q2),
• des premiers moyens de comparaison (M2), dans un intervalle d'intérêt (Δt), d'un paramètre physique (A1, A2, F1, F2) avec une forme prédéterminé comprenant un nombre prédéterminé de pics dont une valeur caractéristique (Per) est supérieure à un seuil,
• des premiers moyens de vérification (M3) d'une synchronisation des formes prédéterminées entre les deux radars (R1, R2),
• pour le premier radar (R1), des deuxièmes moyens de vérification (M4) dans ledit intervalle d'intérêt (Δt), de la présence d'un nombre prédéterminé de changement de phase entre la composante en phase (I1) et la composante en décalage de phase (Q1),
• pour le deuxième radar (R2), des deuxièmes moyens de comparaison (M6) entre une amplitude (A2) de la composante en phase (I2) ou en décalage de phase (Q2) avec une amplitude minimum (Amin),
• pour le deuxième radar (R2), des troisièmes moyens de vérification (M7) dans le dite intervalle d'intérêt (Δt) de la présence du nombre prédéterminé de changement de phase entre la composante en phase (I2) et la composante en décalage de phase (Q2), et
• des moyens de déverrouillage de l'ouvrant (M8) en fonction des résultats des vérification(s) et de la comparaison(s) ci-dessus.

10. Dispositif de détection (D), selon l'une quelconque des revendications 10 ou 11, caractérisé ce en que le paramètre caractéristique des composantes en phase (I1, I2) ou en décalage de phase (Q1, Q2) est une amplitude (A1, A2) ou une fréquence (F1, F2).

11. Dispositif de détection (D), selon l'une quelconque des revendications 8 à 10, caractérisé en que la composante en décalage de phase (Q1, Q2) est une composante en quadrature de phase, décalée d'un angle de 90° par rapport à la composante en phase (I).

12. Dispositif de détection (D), selon l'une quelconque des revendications 8 à 11, **caractérisé en ce que** la valeur caractéristique d'un pic est une persistance du pic (Per).

13. Dispositif de détection (D), selon l'une quelconque des revendications 8 à 11, **caractérisé en ce que** la valeur caractéristique d'un pic est une amplitude du pic, ou une intégrale des valeurs du pic selon le temps entre une valeur minimum du pic et une valeur maximum du pic.

14. Dispositif de détection (D), selon l'une quelconque des revendications 8 à 13, **caractérisé en ce que** le mouvement prédéterminé étant celui d'un aller-retour d'une partie du corps de l'utilisateur vers le dispositif de détection, le nombre prédéterminé de changement de phase est égal à un et le nombre prédéterminé de pic est égale à deux

15. Véhicule automobile (V), comprenant un dispositif de détection (D) selon l'une quelconque des revendications 10 à 14.

## Patentansprüche

1. Verfahren zum Öffnen einer Tür eines Kraftfahrzeugs (V), wobei das Fahrzeug mit einer Detektionsvorrichtung (D) zur Detektion einer vorbestimmten Bewegung eines Körperteils eines Benutzers ausgestattet ist, wobei das Verfahren **dadurch gekennzeichnet ist, dass** es die folgenden Schritte umfasst:
• man stattet die Vorrichtung vorab mit zwei Doppler-Radaren aus, wobei ein erstes Radar (R1) dazu angepasst ist, zum Heck des Fahrzeugs (V) hin ausgerichtete Wellen auszusenden, wobei ein zweites Radar (R2) dazu angepasst ist, zum Boden (V) hin ausgerichtete Wellen auszusenden, umfassend jeweils eine Antenne (A1) der Mittel zum Senden und Empfangen von Radarwellen (10) und Verarbeitungsmittel (20) zum Verarbeiten der reflektierten Radarwellen, die dazu angepasst sind, die vorbestimmte Bewegung zu detektieren,
• man misst für jedes Radar (R1, R2) mit fester Frequenz eine In-Phase-Komponente (I1, I2) und eine Phasenverschiebungskomponente (Q1, Q2) der reflektieren Wellen,
• man bestimmt einen charakteristischen Parameter (A1, A2, F1, F2) mindestens einer der beiden Komponenten für jedes Radar (R1, R2);
• man vergleicht für jedes Radar (R1, R2) den charakteristischen Parameter (A1, A2, F1, F2) mit einer vorbestimmten Form, umfassend eine vorbestimmte Anzahl von Peaks, von denen ein Wert (Per) größer als ein vorbestimmter Persistenzschwellenwert ist,
• wenn der charakteristische Parameter (A1, A2, F1, F2) für das erste und zweite Radar (R1, R2) die vorbestimmte Form in einem selben Intervall von Interesse (Δt) aufweist,
• und wenn in dem Intervall von Interesse (Δt) das erste Radar (R1) ebenfalls eine vorbestimmte Anzahl von Phasenänderungen zwischen der In-Phase-Komponente (I1) und der Phasenverschiebungskomponente (Q1) aufweist,
• dann finden eine Detektion der vorbestimmten Bewegung und ein Öffnen der Tür statt,
• ansonsten findet kein Öffnen der Tür statt.

2. Verfahren zum Öffnen einer Tür eines Kraftfahrzeugs (V), wobei das Fahrzeug mit einer Detektionsvorrichtung (D) zur Detektion einer vorbestimmten Bewegung eines Körperteils eines Benutzers ausgestattet ist, wobei das Verfahren **dadurch gekennzeichnet ist, dass** es die folgenden Schritte umfasst:
• man stattet die Vorrichtung vorab mit zwei Doppler-Radaren aus, wobei ein erstes Radar (R1) dazu angepasst ist, zum Heck des Fahrzeugs (V) hin ausgerichtete Wellen auszusenden, wobei ein zweites Radar (R2) dazu angepasst ist, zum Boden (V) hin ausgerichtete Wellen auszusenden, umfassend jeweils eine Antenne (A1) der Mittel zum Senden und Empfangen von Radarwellen (10) und Verarbeitungsmittel (20) zum Verarbeiten der reflektierten Radarwellen, die dazu angepasst sind, die vorbestimmte Bewegung zu detektieren,
• man misst für jedes Radar (R1, R2) mit fester Frequenz eine In-Phase-Komponente (I1, I2) und eine Phasenverschiebungskomponente (Q1, Q2) der reflektieren Wellen,
• man bestimmt einen charakteristischen Parameter (A1, A2, F1, F2) mindestens einer der beiden Komponenten für jedes Radar (R1, R2);
• man vergleicht für jedes Radar (R1, R2) den charakteristischen Parameter (A1, A2, F1, F2) mit einer vorbestimmten Form, umfassend eine vorbestimmte Anzahl von Peaks, von denen ein Wert (Per) größer als ein vorbestimmter Persistenzschwellenwert ist,
• man überprüft, dass der charakteristische Parameter (A1, A2, F1, F2) für das erste und zweite Radar (R1, R2) die vorbestimmte Form in einem selben Intervall von Interesse (Δt) aufweist,
• man überprüft, dass in dem Intervall von Interesse (Δt) das erste Radar (R1) ebenfalls eine vorbestimmte Anzahl von Phasenänderungen zwischen der In-Phase-Komponente (I1) und der Phasenverschiebungskomponente (Q1) aufweist, und wenn dies der Fall ist, dann umfasst das Verfahren einen folgenden zusätzlichen Schritt:
• Vergleichen, in dem Intervall von Interesse (Δt), einer Amplitude (A2) einer der beiden Komponenten des zweiten Radars (R2) mit einer Mindestamplitude (Amin), wenn die Amplitude (A2) größer als die Mindestamplitude (Amin) ist, dann
• finden eine Detektion der vorbestimmten Bewegung und ein Öffnen der Tür statt,
ansonsten:
i) wenn in dem Intervall von Interesse (Δt) das zweite Radar (R2) ebenfalls die vorbestimmte Anzahl von Phasenänderungen zwischen der In-Phase-Komponente (I2) und der Phasenverschiebungskomponente (Q2) aufweist,
1) dann finden eine Detektion der vorbestimmten Bewegung und ein Öffnen der Tür statt,
2) ansonsten findet kein Öffnen der Tür statt.

3. Verfahren zum Öffnen einer Tür nach einem der vorhergehenden Ansprüche, **dadurch gekennzeichnet, dass** der charakteristische Parameter der In-Phase-Komponente (I1, I2) oder Phasenverschiebungskomponente (Q1, Q2) eine Amplitude (A1, A2) oder eine Frequenz (F1, F2) ist.

4. Verfahren zum Öffnen einer Tür nach einem der vorhergehenden Ansprüche, **dadurch gekennzeichnet, dass** die Phasenverschiebungskomponente (Q1, Q2) eine Phasenquadraturkomponente ist, die in Bezug auf die In-Phase-Komponente (I1, I2) um einen Winkel von 90° verschoben ist.

5. Verfahren zum Öffnen einer Tür nach einem der vorhergehenden Ansprüche, **dadurch gekennzeichnet, dass** der charakteristische Wert eines Peaks eine Persistenz des Peaks (Per) ist.

6. Verfahren zum Öffnen einer Tür nach einem der Ansprüche 1 bis 5, **dadurch gekennzeichnet, dass** der charakteristische Wert (Per) eines Peaks eine Amplitude des Peaks ist oder ein Integral der Werte des Peaks gemäß der Zeit zwischen einem Mindestwert des Peaks und einem Höchstwert des Peaks.

7. Verfahren zum Öffnen einer Tür nach einem der vorhergehenden Ansprüche, **dadurch gekennzeichnet, dass** die vorbestimmte Bewegung eine Hin- und Zurückbewegung eines Körperteils des Benutzers zu der Detektionsvorrichtung hin ist, wobei die vorbestimmte Anzahl von Phasenänderungen gleich eins ist und die vorbestimmte Anzahl von Peaks gleich zwei ist.

8. Detektionsvorrichtung (D) zur Detektion einer vorbestimmten Bewegung eines Körperteils eines Benutzers, die dazu angepasst ist, in ein Kraftfahrzeug (V) integriert zu werden, wobei die Vorrichtung **dadurch gekennzeichnet** ist, das sie zwei Doppler-Radare umfasst, wobei ein erstes Radar (R1) dazu angepasst ist, zum Heck des Fahrzeugs (V) hin ausgerichtete Wellen auszusenden, wobei ein zweites Radar (R2) dazu angepasst ist, zum Boden (V) hin ausgerichtete Wellen auszusenden, umfassend jeweils eine Antenne (A) der Mittel zum Senden und Empfangen von Radarwellen (10) und Verarbeitungsmittel (20) zum Verarbeiten der reflektierten Radarwellen, die dazu angepasst sind, die vorbestimmte Bewegung zu detektieren, wobei die Verarbeitungsmittel (20) umfassen:
• Extraktionsmittel (M1) zum Extrahieren mindestens eines physikalischen Parameters (A1, A2, F1, F2) einer In-Phase-Komponente (I1, I2) oder einer Phasenverschiebungskomponente (Q1, Q2),
• erste Vergleichsmittel (M2) zum Vergleichen, in einem Intervall von Interesse (Δt), eines physikalischen Parameters (A1, A2, F1, F2) mit einer vorbestimmten Form, umfassend eine vorbestimmte Anzahl von Peaks, von denen ein charakteristischer Wert (Per) größer als ein Schwellenwert ist,
• erste Überprüfungsmittel (M3) zum Überprüfen einer Synchronisation der vorbestimmten Formen zwischen den beiden Radaren (R1, R2),
und nur für das erste Radar (R1):
• zweite Überprüfungsmittel (M4) zum Überprüfen, in dem Intervall von Interesse (Δt), des Vorliegens einer vorbestimmten Anzahl von Phasenänderungen zwischen der In-Phase-Komponente (I1) und der Phasenverschiebungskomponente (Q1),
• Mittel zum Entriegeln der Tür (M5) in Abhängigkeit von den Ergebnissen der obigen Überprüfung(en) und Vergleichung(en).

9. Detektionsvorrichtung (D) zur Detektion einer vorbestimmten Bewegung eines Körperteils eines Benutzers, die dazu angepasst ist, in ein Kraftfahrzeug (V) integriert zu werden, wobei die Vorrichtung **dadurch gekennzeichnet** ist, das sie zwei Doppler-Radare umfasst, wobei ein erstes Radar (R1) dazu angepasst ist, zum Heck des Fahrzeugs (V) hin ausgerichtete Wellen auszusenden, wobei ein zweites Radar (R2) dazu angepasst ist, zum Boden (V) hin ausgerichtete Wellen auszusenden, umfassend jeweils eine Antenne (A) der Mittel zum Senden und Empfangen von Radarwellen (10) und Verarbeitungsmittel (20) zum Verarbeiten der reflektierten Radarwellen, die dazu angepasst sind, die vorbestimmte Bewegung zu detektieren, wobei die Verarbeitungsmittel (20) umfassen:
• Extraktionsmittel (M1) zum Extrahieren mindestens eines physikalischen Parameters (A1, A2, F1, F2) einer In-Phase-Komponente (I1, I2) oder einer Phasenverschiebungskomponente (Q1, Q2),
• erste Vergleichsmittel (M2) zum Vergleichen, in einem Intervall von Interesse (Δt), eines physikalischen Parameters (A1, A2, F1, F2) mit einer vorbestimmten Form, umfassend eine vorbestimmte Anzahl von Peaks, von denen ein charakteristischer Wert (Per) größer als ein Schwellenwert ist,
• erste Überprüfungsmittel (M3) zum Überprüfen einer Synchronisation der vorbestimmten Formen zwischen den beiden Radaren (R1, R2),
• für das erste Radar (R1) zweite Überprüfungsmittel (M4) zum Überprüfen, in dem Intervall von Interesse (Δt), des Vorliegens einer vorbestimmten Anzahl von Phasenänderungen zwischen der In-Phase-Komponente (I1) und der Phasenverschiebungskomponente (Q1),
• für das zweite Radar (R2) zweite Vergleichsmittel (M6) zum Vergleichen einer Amplitude (A2) der In-Phase-Komponente (I2) oder Phasenschiebungskomponente (Q2) mit einer Mindestamplitude (Amin),
• für das zweite Radar (R2) dritte Überprüfungsmittel (M7) zum Überprüfen, in dem Intervall von Interesse (Δt), des Vorliegens einer vorbestimmten Anzahl von Phasenänderungen zwischen der In-Phase-Komponente (I2) und der Phasenverschiebungskomponente (Q2) und
• Mittel zum Entriegeln der Tür (M8) in Abhängigkeit von den Ergebnissen der obigen Überprüfung(en) und Vergleichung(en) .

10. Detektionsvorrichtung (D) nach einem der Ansprüche 10 oder 11, **dadurch gekennzeichnet, dass** der charakteristische Parameter der In-Phase-Komponente (I1, I2) oder Phasenverschiebungskomponente (Q1, Q2) eine Amplitude (A1, A2) oder eine Frequenz (F1, F2) ist.

11. Detektionsvorrichtung (D) nach einem der Ansprüche 8 bis 10, **dadurch gekennzeichnet, dass** die Phasenverschiebungskomponente (Q1, Q2) eine Phasenquadraturkomponente ist, die in Bezug auf die In-Phase-Komponente (I) um einen Winkel von 90° verschoben ist.

12. Detektionsvorrichtung (D) nach einem der Ansprüche 8 bis 11, **dadurch gekennzeichnet, dass** der charakteristische Wert eines Peaks eine Persistenz des Peaks (Per) ist.

13. Detektionsvorrichtung (D) nach einem der Ansprüche 8 bis 11, **dadurch gekennzeichnet, dass** der charakteristische Wert eines Peaks eine Amplitude des Peaks ist oder ein Integral der Werte des Peaks gemäß der Zeit zwischen einem Mindestwert des Peaks und einem Höchstwert des Peaks.

14. Detektionsvorrichtung (D) nach einem der Ansprüche 8 bis 13, **dadurch gekennzeichnet, dass** die vorbestimmte Bewegung eine Hin- und Zurückbewegung eines Körperteils des Benutzers zu der Detektionsvorrichtung hin ist, wobei die vorbestimmte Anzahl von Phasenänderungen gleich eins ist und die vorbestimmte Anzahl von Peaks gleich zwei ist.

15. Kraftfahrzeug (V), umfassend eine Detektionsvorrichtung (D) nach einem der Ansprüche 10 bis 14.

## Claims

1. Method for opening a door of a motor vehicle (V), the vehicle (V) being equipped with a device (D) for detecting a predetermined movement of a part of the body of a user, the method being **characterized in that** it comprises the following steps:
• equipping the device beforehand with two doppler radars, a first radar (R1) being configured to transmit waves towards the rear of the vehicle (V), a second radar (R2) being configured to transmit waves towards the ground (V), each radar comprising an antenna (A1), means (10) for transmitting and receiving radar waves, and means (20) for processing reflected radar waves configured to detect the predetermined movement;
• measuring, at set frequency, for each radar (R1, R2), a phase component (I1, I2) and a phase-offset component (Q1, Q2) of the reflected waves;
• determining a characteristic parameter (A1, A2, F1, F2) of at least one of the two components for each radar (R1, R2);
• comparing, for each radar (R1, R2), the characteristic parameter (A1, A2, F1, F2) with a predetermined form, comprising a predetermined number of peaks a characteristic value (Per) of which is greater than a predetermined persistence threshold;
• if the characteristic parameter (A1, A2, F1, F2) has for the first and second radars (R1, R2) the predetermined form in a given interval of interest (Δt),
• and if, in said interval of interest (Δt), the first radar (R1) also has a predetermined number of phase changes between the phase component (I1) and the phase-offset component (Q1),
• then detecting the predetermined movement and opening the door,
• otherwise not opening the door.

2. Method for opening a door of a motor vehicle (V), the vehicle (V) being equipped with a device (D) for detecting a predetermined movement of a part of the body of a user, the method being **characterized in that** it comprises the following steps:
• equipping the device beforehand with two doppler radars, a first radar (R1) being configured to transmit waves towards the rear of the vehicle (V), a second radar (R2) being configured to transmit waves towards the ground (V), each radar comprising an antenna (A1), means (10) for transmitting and receiving radar waves, and means (20) for processing reflected radar waves configured to detect the predetermined movement;
• measuring, at set frequency, for each radar (R1, R2), a phase component (I1, I2) and a phase-offset component (Q1, Q2) of the reflected waves;
• determining a characteristic parameter (A1, A2, F1, F2) of at least one of the two components for each radar (R1, R2);
• comparing, for each radar (R1, R2), the characteristic parameter (A1, A2, F1, F2) with a predetermined form, comprising a predetermined number of peaks a characteristic value (Per) of which is greater than a predetermined persistence threshold;
• verifying whether the characteristic parameter (A1, A2, F1, F2) has for the first and second radars (R1, R2) the predetermined form in a given interval of interest (Δt);
• verifying whether, in said interval of interest (Δt), the first radar (R1) also has a predetermined number of phase changes between the phase component (I1) and the phase-offset component (Q1), and if so, then the method comprises an additional step as follows:
• comparing, in said interval of interest (Δt), an amplitude (A2) of one of the two components of the second radar (R2) with a minimum amplitude (Amin), and if said amplitude (A2) is greater than the minimum amplitude (Amin), then
• detecting the predetermined movement and opening the door,
otherwise
i) if in said interval of interest (Δt), the second radar (R2) also has the predetermined number of phase changes between the phase component (I2) and the phase-offset component (Q2),
1) then detecting the predetermined movement and opening the door,
2) otherwise not opening the door.

3. Method for opening a door, according to any one of the preceding claims, **characterized in that** the characteristic parameter of the phase components (I1, I2) or phase-offset components (Q1, Q2) is an amplitude (A1, A2) or a frequency (F1, F2).

4. Method for opening a door, according to any one of the preceding claims, **characterized in that** the phase-offset component (Q1, Q2) is a quadrature component, offset by an angle of 90° with respect to the phase component (I1, I2).

5. Method for opening a door, according to any one of the preceding claims, **characterized in that** the characteristic value of a peak is a persistence (Per) of the peak.

6. Method for opening a door, according to any one of Claims 1 to 5, **characterized in that** the characteristic value (Per) of a peak is an amplitude of the peak, or an integral of the values of the peak as a function of time between a minimum value of the peak and a maximum value of the peak.

7. Method for opening a door, according to any one of the preceding claims, **characterized in that** the predetermined movement being a back-and-forth movement of a part of the body of the user with respect to the detecting device, the predetermined number of phase changes is equal to one and the predetermined number of peaks is equal to two.

8. Device (D) for detecting a predetermined movement of a part of the body of a user, configured to be located on board a motor vehicle (V), said device being **characterized in that** it comprises two doppler radars, a first radar (R1) being configured to transmit waves towards the rear of the vehicle (V), a second radar (R2) being configured to transmit waves towards the ground (V), each radar comprising an antenna (A), means (10) for transmitting and receiving radar waves, and means (20) for processing reflected radar waves configured to detect the predetermined movement, the processing means (20) comprising:
• means (M1) for extracting at least one physical parameter (A1, A2, F1, F2) of a phase component (I1, I2) or phase-offset component (Q1, Q2),
• first means (M2) for comparing, in an interval of interest (Δt), a physical parameter (A1, A2, F1, F2) with a predetermined form comprising a predetermined number of peaks a characteristic value (Per) of which is greater than a threshold,
• first means (M3) for verifying a synchronization of the predetermined forms between the two radars (R1, R2), and, for the first radar (R1) only:
• second means (M4) for verifying, in said interval of interest (Δt), the presence of a predetermined number of phase changes between the phase component (I1) and the phase-offset component (Q1),
• means (M5) for unlocking the door depending on the results of the above verification(s) and comparison(s).

9. Device (D) for detecting a predetermined movement of a part of the body of a user, configured to be located on board a motor vehicle (V), said device being **characterized in that** it comprises two doppler radars, a first radar (R1) being configured to transmit waves towards the rear of the vehicle (V), a second radar (R2) being configured to transmit waves towards the ground (V), each radar comprising an antenna (A), means (10) for transmitting and receiving radar waves, and means (20) for processing reflected radar waves configured to detect the predetermined movement, the processing means (20) comprising:
• means (M1) for extracting at least one physical parameter (A1, A2, F1, F2) of a phase component (I1, I2) or phase-offset component (Q1, Q2),
• first means (M2) for comparing, in an interval of interest (Δt), a physical parameter (A1, A2, F1, F2) with a predetermined form comprising a predetermined number of peaks a characteristic value (Per) of which is greater than a threshold,
• first means (M3) for verifying a synchronization of the predetermined forms between the two radars (R1, R2),
• for the first radar (R1), second means (M4) for verifying, in said interval of interest (Δt), the presence of a predetermined number of phase changes between the phase component (I1) and the phase-offset component (Q1),
• for the second radar (R2), second means (M6) for comparing an amplitude (A2) of the phase component (I2) or phase-offset component (Q2) with a minimum amplitude (Amin),
• for the second radar (R2), third means (M7) for verifying, in said interval of interest (Δt), the presence of the predetermined number of phase changes between the phase component (I2) and the phase-offset component (Q2), and
• means (M8) for unlocking the door depending on the results of the above verification(s) and comparison(s).

10. Detecting device (D) according to either one of Claims 10 and 11, **characterized in that** the characteristic parameter of the phase components (I1, I2) or phase-offset components (Q1, Q2) is an amplitude (A1, A2) or a frequency (F1, F2).

11. Detecting device (D) according to any one of Claims 8 to 10, **characterized in that** the phase-offset component (Q1, Q2) is a quadrature component, offset by an angle of 90° with respect to the phase component (I).

12. Detecting device (D) according to any one of Claims 8 to 11, **characterized in that** the characteristic value of a peak is a persistence (Per) of the peak.

13. Detecting device (D) according to any one of Claims 8 to 11, **characterized in that** the characteristic value of a peak is an amplitude of the peak, or an integral of the values of the peak as a function of time between a minimum value of the peak and a maximum value of the peak.

14. Detecting device (D) according to any one of Claims 8 to 13, **characterized in that** the predetermined movement being a back-and-forth movement of a part of the body of the user with respect to the detecting device, the predetermined number of phase changes is equal to one and the predetermined number of peaks is equal to two.

15. Motor vehicle (V) comprising a detecting device (D) according to any one of Claims 10 to 14.
